# EUROPÄISCHE PATENTSCHRIFT

(11) **EP 1 826 079 B1**
(45) Veröffentlichungstag und Bekanntmachung des Hinweises auf die Patenterteilung: **11.04.2012**
(21) Anmeldenummer: 07003750.2
(22) Anmeldetag: 23.02.2007
(51) Int. Cl.: B60T 7/06, B60R 21/09

(54) **Pedalwerk für ein Kraftfahrzeug**
Pedal assembly for a motor vehicle
Ensemble de pédale pour un véhicule automobile

(30) Priorität: 27.02.2006 DE 102006008905
(43) Veröffentlichungstag der Anmeldung: 29.08.2007
(73) Patentinhaber: GM Global Technology Operations LLC, Detroit, MI 48265-3000 (US)
(72) Erfinder: Geisel, Andreas, 56357 Bogel (DE)
(74) Vertreter: Daniel, Ulrich W.P.

(56) Entgegenhaltungen:
- EP-A- 0 659 615
- EP-A- 1 479 578
- DE-U1- 20 103 248

## Beschreibung

Die Erfindung betrifft ein Pedalwerk für ein Kraftfahrzeug, zum Beispiel ein Brems- oder Kupplungspedalwerk für ein Kraftfahrzeug und zum Beispiel für ein Personenkraftfahrzeug, gemäß dem Oberbegriff des Anspruches 1.

Die Pedale in einem Kraftfahrzeug sind im Fahrgastraum hinter der Stirnwand angebracht und über eine Kolbenstange mit entsprechenden Komponenten im Motorenraum, z. B. einem Bremskraftverstärker, verbunden. Kommt es zu einem Frontalzusammenstoß des Fahrzeugs, so wird bedingt durch die Deformation des Karosserievorderbaus die Kolbenstange in den Fahrgastraum hineingedrückt und kann Verletzungen der unteren Extremitäten des Fahrers zur Folge haben.

Die DE 201 03 248 U1 offenbart ein Pedalwerk mit einem Pedal, bei dem dem Pedal eine Pedalstütze zugeordnet ist. Bei einem Frontalzusammenstoß des Fahrzeugs erfährt die Pedalstütze eine Schwenkbewegung in Richtung der Stirnwand, die sich gleichgerichtet auf das Pedal überträgt.

Die EP 0 659 615 A1 beschreibt ein Pedalwerk, mit zwei zueinander beabstandet angeordneten Strebenschenkeln. Jeder Strebenschenkel besitzt ein offenes Achslager, in das ein Ende einer Pedalachse eingesetzt ist. Im Fall eines Frontalzusammenstoßes gelangt das schwenkbar um die Pedalachse gelagerte Pedal außer Eingriff mit der Pedalstrebe. Hierdurch wird der auf das Pedal einwirkende Kraftfluss unterbrochen.

Gemäß der gattungsbildenden EP 1 479 578 A2 besteht das Pedalwerk aus einer Kolbenstange und einem Pedal, bei dem der Kolbenstange eine erste Bauteilfläche und dem Pedal eine zweite Bauteilfläche zugeordnet ist. Die beiden Bauteilflächen sind so geformt, dass sie in flächigem Kontakt zueinander stehen, wobei mindestens eine der beiden Bauteilflächen eine profilierte Fläche ist. Das die erste Bauteilfläche besitzende erste Bauteil und das die zweite Bauteilfläche besitzende zweite Bauteil sind gemeinsam um eine Achse drehbar gelagert und miteinander lösbar verbunden. Sie können also als eine Einheit um die besagte Achse, auch Pedalachse genannt, gedreht werden. Weiterhin stützt sich das zweite Bauteil bei einem Fahrzeugaufprall an einem stationären Karosserieteil ab. Dabei wird das zweite Bauteil von einem sich zwischen dem Pedal und der Kolbenstange befindlichen, separaten Koppelstück mit Langlöchern gebildet, das ebenfalls auf der Achse drehbar gelagert ist. Bolzen, die das Pedal und das erste Bauteil miteinander verbinden, verlaufen durch diese Langlöcher.

Im normalen Fahrbetrieb stehen das Koppelstück und das erste Bauteil über die besagten Bauteilflächen miteinander in Kontakt, was durch die Bolzenverbindung gewährleistet ist. Das Pedal und das erste Bauteil werden daher beim Betätigen des Pedals als eine Einheit um die Achse gedreht bzw. geschwenkt, wobei das Koppelteil wegen des durch die Bauteilflächen vermittelten Kontakts mitgenommen wird.

Kommt es zu einem Frontalzusammenstoß eines mit dem Pedalwerk ausgestatteten Fahrzeugs, so wird ein Kraftfluss in Richtung der Kolbenstange, d. h. weitgehend in Fahrzeuglängsrichtung, eingeleitet. Dadurch wird die Kolbenstange in den Fahrgastraum hineingedrückt. Die Längsbewegung der Kolbenstange wird bedingt durch eine geeignete Verbindung der Kolbenstange mit dem ersten Bauteil in eine Drehbewegung einer aus dem Koppelteil und dem ersten Bauteil bestehenden Einheit überführt. Das Koppelteil kann sich nur um einen vorgegebenen Maximalwinkel drehen. Anschließend stößt es gegen ein stationäres Karosserieteil, stützt sich daran ab, und dreht sich nicht mehr weiter.

Unter einem stationären Karosserieteil soll ein Teil verstanden werden, das bei einem Frontalzusammenstoß keine oder nur eine geringe Deformation erfährt. Bei weiterhin eingeleitetem Kraftfluss bedingt das Abstützen des zweiten Bauteils, nämlich des Koppelteils, dass das erste Bauteil relativ zum zweiten Bauteil um die besagte Achse gedreht wird.

Das dadurch kraftfreie Pedal vermeidet eine Verletzung des Fahrers.

Es ist eine Aufgabe der Erfindung, den Aufbau des Pedalwerks weiter zu vereinfachen und dennoch auch bei einem hohen in das Pedalwerk eingekoppelten Kraftfluss zuverlässig eine Verletzung des Fahrers zu vermeiden.

Dies wird erfindungsgemäß dadurch erreicht, dass das zweite Bauteil das Pedal ist und dass die Bolzen der Bolzenverbindung hierbei durch Langlöcher des Pedals geführt sind. Somit kann auf ein gesondertes Koppelteil verzichtet werden.

Erfindungsgemäß stützt sich somit als konstruktiv einfachere Lösung ein Arm des Pedals im Fall eines Frontalzusammenstoßes an einem karosseriefesten Bauteil ab. Im Regelfall muss das Pedal dann im Vergleich zu bekannten Pedalen stabiler ausgeführt sein und zum Beispiel eine größere Wandstärke haben.

Vorteilhafte Weiterbildungen werden durch die Merkmale der abhängigen Ansprüche wiedergegeben.

Bei einer weiteren Ausführungsform ist das erste Bauteil eine Scheibe, ist die Scheibenfläche parallel zur Kolbenstange ausgerichtet, und ist die Scheibe exzentrisch und drehbar mit der Kolbenstange befestigt. Die Scheibe kann beispielsweise am äußeren Ende der Kolbenstange, d.h. dem Fahrgastraum zugewandten Ende der Kolbenstange, drehbar montiert sein. Mit dieser Ausführung des ersten Bauteils wird die im Falle eines Frontalzusammenstoßes auftretende translatorische Bewegung der Kolbenstange zunächst in eine Drehbewegung der Scheibe und dann in eine translatorische Bewegung in Achsrichtung, überführt. Die Achse ist hierbei senkrecht zur Kolbenstange angeordnet.

In einer weiteren Ausführungsform des Pedalwerks ist zwischen dem ersten Bauteil und dem zweiten Bauteil eine lösbare Bolzenverbindung vorgesehen. Durch die Überführung der Relativdrehung der beiden Bauteile in eine Translationsbewegung entlang der Achse wird die Verbindung gelöst. Entfernen sich die beiden Bauteile bei der axialen Translationsbewegung voneinander, so wird der Bolzen aus einem der beiden Bauteile herausgetrieben und darüber die Verbindung gelöst. Der Fachmann wird jedoch erkennen, dass man im Allgemeinen für den Normalbetrieb des Pedalwerks auch andere Verbindungen zwischen den beiden Bauteilen wählen kann, z.B. eine formschlüssige Verbindung.

In einer anderen Ausführungsform des Pedalwerks ist die Höhe des Bauteilflächenprofils größer als diejenige Strecke, um die der Bolzen in das erste Bauteil, oder zweite Bauteil eingedrungen ist. In diesem Fall entfernen sich bei einem Frontalzusammenstoß die beiden Bauteile um die genannte Höhe des Bauteilflächenprofils voneinander. Um diese Strecke bewegt sich dann der Bolzen aus dem ersten oder zweiten Bauteil, wodurch die Bolzenverbindung gelöst und der Kraftfluss unterbrochen wird.

In einer anderen Ausführungsform des Pedalwerks besitzt eine Bauteilfläche eine Erhebung und die andere Bauteilfläche eine hierzu korrespondierende Ausnehmung. Im normalen Fahrbetrieb greift die Erhebung in die Ausnehmung, so dass die beiden Bauteilflächen einen flächigen Kontakt haben. Bei der Relativdrehung der Bauteilflächen zueinander, d.h. im Fall eines Frontalzusammenstoßes, bewegt sich die eine Bauteilfläche entlang der anderen Bauteilfläche, wodurch sich die zugehörigen Bauteile voneinander wegbewegen.

In einer weiteren Ausführungsform umfasst die Profilierung eine Erhebung mit einer im Wesentlichen flächigen Schräge. Beim Umwandeln der Relativdrehbewegung in eine Translationsbewegung gleitet die Schräge am anderen Bauteils mit geringer Reibung entlang. Die flächige Schräge kann zum Beispiel eine Ebene sein, sodass sich ein Teil eines Bauteils reibungsarm eine schiefe Ebene entlang bewegt.

In einer weiteren Ausführungsform umfasst die Profilierung ein Wellenprofil, so dass sich bei einem Frontalzusammenstoß das eine Bauteil entlang von Wellenbergen vom anderen Bauteil weg bewegt. Der Fachmann wird jedoch erkennen, dass auch anderes Profile für die erste und/oder zweite Bauteilfläche wählbar sind, durch die die Relativdrehung der beiden Bauteile in eine Axialbewegung überführt werden kann.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigt
- Fig. 1:: eine Einheit aus Bremsmodul und Pedalwerk, angebunden an einen Fahrzeugquerträger;
- Fig. 2:: das Pedalwerk in einer Seitenansicht;
- Fig. 3:: eine erste Ausführungsform des Pedalwerks in einer perspektivischen Seitenansicht;
- Fig. 4:: eine zweite dem Stand der Technik ent- sprechende Ausführungsform des Pedalwerks in einer perspektivischen Seitenansicht;
- Fig. 5,6:: Detailansichten der ersten Ausführungsform der Figur 3;
- Fig. 7:: ist eine Schnittansicht entlang des Schnitts A-A von Fig. 5,
- Fig. 8:: eine Seitenansicht der ersten Ausführungsform mit Blick parallel zur profilierten Fläche;
- Fig. 9,10:: Detailansichten der zweiten Ausführungsform der Figur 4;
- Fig. 11:: eine Seitenansicht der zweiten Ausführungsform mit Blick parallel zur profilierten Fläche.

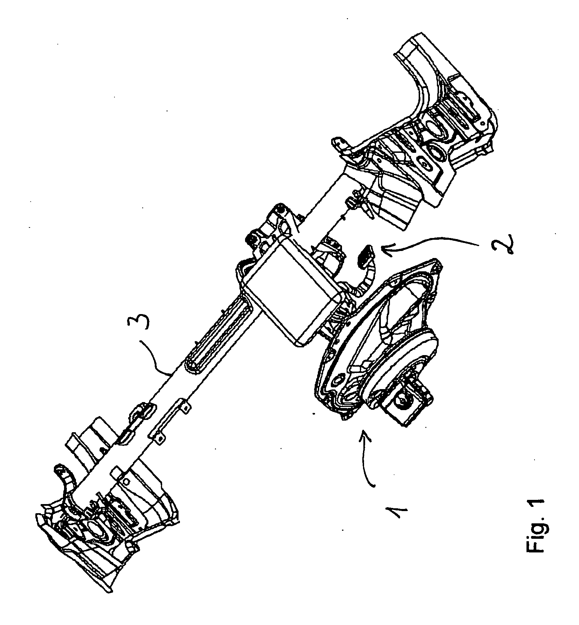

Figur 1 zeigt in einer perspektivischen Seitenansicht eine Einheit aus Bremsmodul 1 und einem Pedalwerk 2, angebunden an einen Fahrzeugquerträger 3. Wie nachfolgend noch näher erläutert wird, stützt sich ein in Figur 1 nicht gezeigtes Bauteil des Pedalwerks 2 an einem Karosseriebauteil 4 ab, das seinerseits mit dem Fahrzeugquerträger 3 fest verbunden ist.

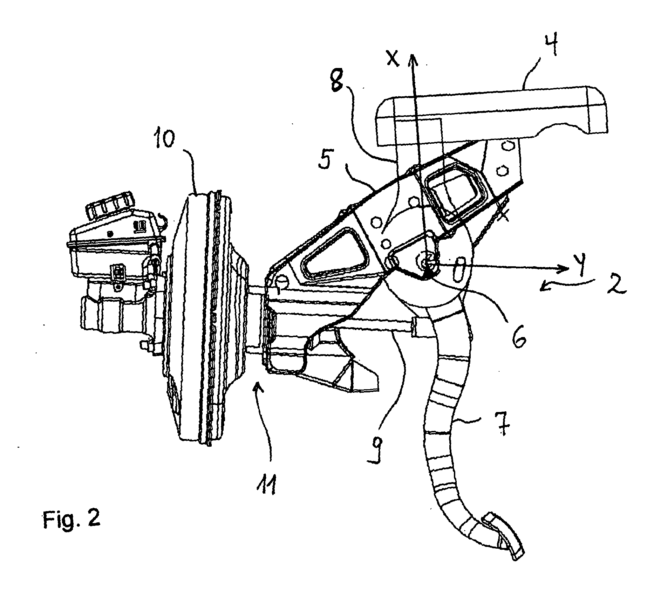

Figur 2 zeigt das Pedalwerk 2 in einer Seitenansicht. Es umfasst zwei beabstandete Seitenwangen, von denen in Figur 2 die vordere Seitenwange 5 zu erkennen ist. Die Seitenwange 5 besitzt innenseitig eine Aufnahme zum Eingriff einer senkrecht auf der Figurenebene stehenden Achse 6. Um die Achse 6 ist ein Pedal 7 drehbar gelagert, so dass die Achse 6 auch als Pedalachse bezeichnet werden kann. Ein zweites Bauteil 8, das mit dem Pedal 7 identisch oder davon verschieden sein kann, endet benachbart zum karosseriefesten Bauteil 4. Beim Betätigen des Pedals 7 wird die Kolbenstange 9 nach links bewegt und darüber der Bremskraftverstärker 10 aktiviert. Da sich der Bremskraftverstärker 10 im Motorbereich und das Pedal 7 im Fahrgastraum eines Fahrzeugs befindet, kommt bei Montage des Pedalwerks 2 in einem Fahrzeug im Bereich 11 die Stirnwand (nicht gezeigt) zu liegen.

Die Achse 6 definiert die z-Achse eines rechtwinkeligen kartesischen Koordinatensystems, bei dem die y-Achse in Richtung der Kolbenstange verläuft. Die y-Richtung verläuft senkrecht zur x- und z-Achse. Diese Festlegung der Koordinatenachsen ist für alle Figuren gleich.

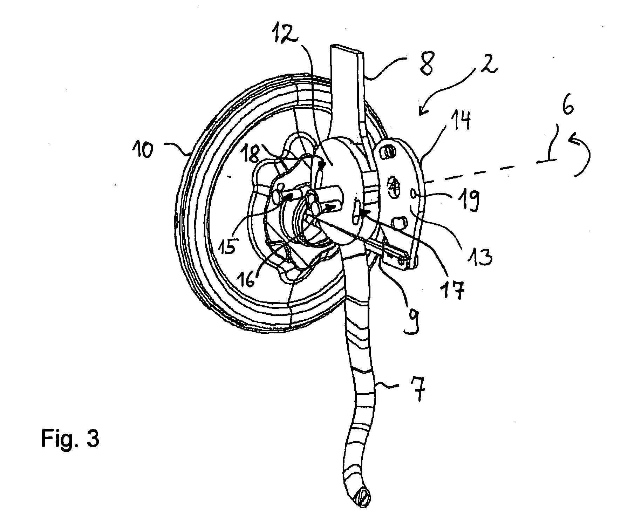

Figur 3 zeigt eine erste Ausführungsform eines Pedalwerks 2 in einer perspektivischen Seitenansicht. Das zweite Bauteil 8 und das Pedal 7 sind hierbei einstückig ausgebildet. Die (nicht gezeigte) Innenfläche des runden Teils 12 des Pedals 7, nachfolgend zweite Bauteilfläche genannt, steht einer ersten Bauteilfläche 13 des ersten Bauteils 14 gegenüber. Das erste Bauteil 14 ist ein scheibenförmiger Mitnehmer, der am Ende der Kolbenstange 9 exzentrisch und drehbar gelagert ist. Das erste Bauteil 14 lässt sich gemeinsam mit dem Pedal 7 um die Achse 6 drehen.

Figur 3 zeigt aus Gründen der Veranschaulichung das erste Bauteil 14 beabstandet zum zweiten Bauteil 8. Im Fahrbetrieb sind das Pedal 7 und das erste Bauteil 14 mit zwei Bolzen 15, 16 verbunden, sodass die erste und zweite Bauteilfläche in flächigem Kontakt stehen. Die Bolzen 15 und 16 sind hierbei durch Langlöcher 17, 18 des Pedals 7 geführt und münden in kreisrunde Löcher 19 des ersten Bauteils 14.

Kommt es zu einem Frontalzusammenstoß eines mit dem Pedalwerk 2 ausgestatteten Fahrzeugs, so wird aufprallbedingt die Kolbenstange 9 in y-Richtung in das Fahrzeuginnere hineingedrückt. Das erste Bauteil 14 überführt diese Längsbewegung in eine Drehbewegung in Pfeilrichtung. Wegen der Bolzenverbindung bewegen sich in einer Anfangsphase das Pedal 7 und das erste Bauteil 14 synchron zueinander. Bereits nach einem kurzen Drehwinkel stützt sich jedoch das zweite Bauteil 8 am (nicht gezeigten) stationären Karosseriebauteil 4 ab. Dies stoppt die Drehbewegung des Pedals 7. Ermöglicht durch die Langlöcher 17 und 18 dreht sich hingegen das zweite Bauteil 14 weiter. Insgesamt kommt es also zu einer Drehung des ersten Bauteils 14 relativ zum Pedal 7.

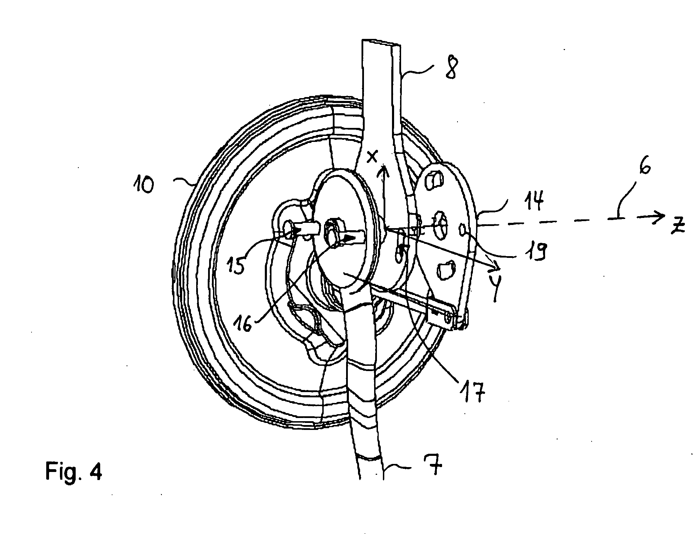

Figur 4 zeigt eine zweite Ausführungsform eines Pedalwerks 2 in einer perspektivischen Seitenansicht. Im Unterschied zur Ausführungsform der Figur 3 sind das zweite Bauteil 8 und das Pedal 7 nicht mehr einstückig ausgebildet, bzw. ist das Pedal 7 nicht das zweite Bauteil selbst. Das zweite Bauteil 8 ist ein separates, mit dem Pedal 7 und dem ersten Bauteil 14 auf der Achse 6 drehbar gelagertes Koppelstück. Es besitzt die vorgenannten Langlöcher 17 und 18 und stützt sich an einem karosseriefesten Bauteil 4 ab. Durch Verschieben in z-Richtung lässt sich ein flächiger Kontakt zwischen den Teilen 7, 8 und 14 herstellen, und wird dieser Kontakt wie bei der ersten Ausführungsform durch eine Bolzenverbindung gesichert.

Die zweite Ausführungsform erlaubt es, vorhandene Pedale zu verbauen. Das separate Bauteil 8 hat dann eine Wandstärke bzw. eine Stabilität, dass es sich im Fall eines Frontalzusammenstoßes zuverlässig ohne Deformation an einem karosseriefesten Bauteil abstützen kann. Diese Wandstärke ist im Regelfall größer als die eines herkömmlichen Pedals.

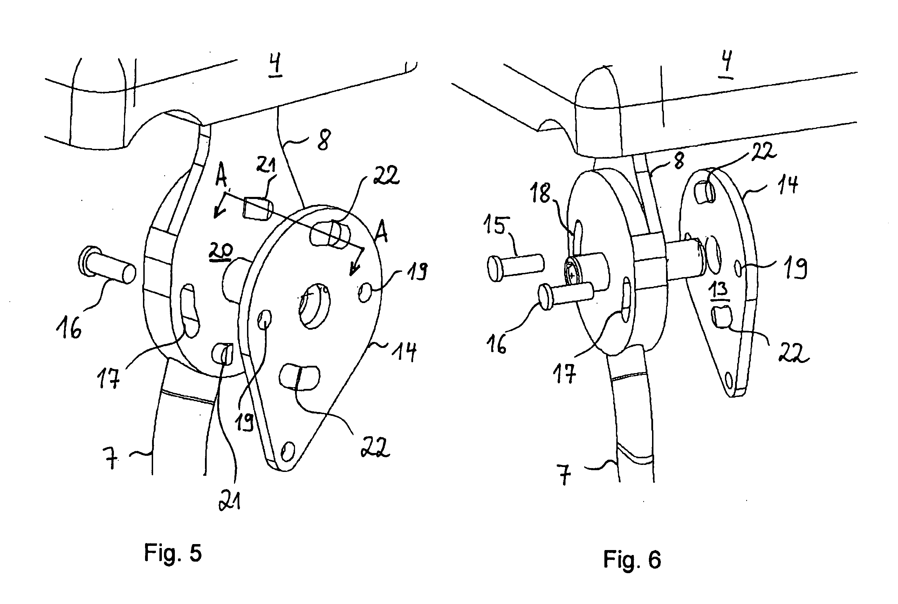

Die Figuren 5 und 6 zeigen aus zwei unterschiedlichen Perspektiven das Pedalwerk der Figur 3 in einer Detailansicht. Man erkennt, dass die zweite Bauteilfläche 20 Erhebungen 21 besitzt und damit profiliert ist. Die Erhebungen 21 des zweiten Bauteils 8 greifen in korrespondierende Löcher 22 des ersten Bauteils 14 ein, so dass beide Bauteile im montierten Zustand flächig aufliegen. Selbstverständlich wäre es auch möglich, dass das erste Bauteil 14 Erhebungen 21 und das zweite Bauteil 8 die Ausnehmungen hat. Auch eine Kombination ist möglich.

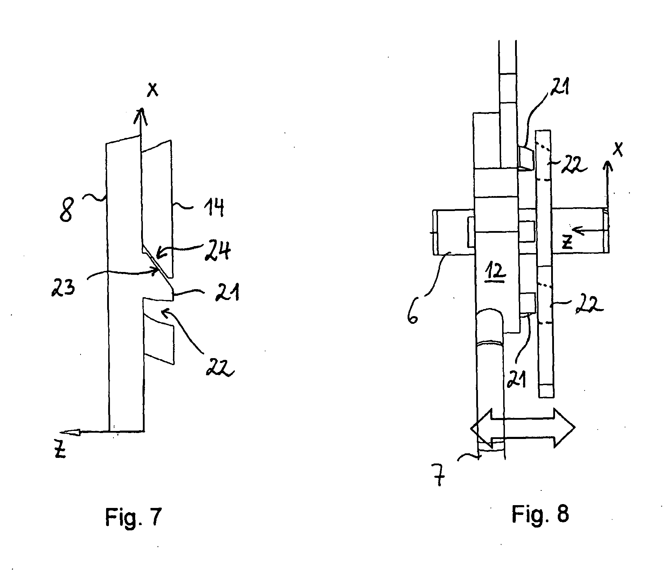

Die Figuren 7 und 8 zeigen jeweils eine Seitenansicht der ersten Ausführungsform mit Blick parallel zur profilierten Fläche, also parallel zur x-y-Ebene. Die z-Richtung verläuft in axialer Richtung. Die Erhebung 21 des zweiten Bauteils 8 greift in ein korrespondierendes Loch 22 oder alternativ in eine korrespondierende Ausnehmung des zweiten Bauteils 14 ein. Die Geometrie des Lochs 22 ist hierbei an die Geometrie der Erhebung 21 angepasst. In den Figuren sind die Erhebungen 21 keilförmig ausgebildet bzw. haben eine Schräge 23 in Gestalt einer schiefen Ebene. Korrespondierend hat das Loch 22 eine Schräge 24 in Gestalt einer schiefen Ebene. Kommt es zu einer Relativdrehung der beiden Bauteile 8 und 14 zueinander, so gleitet die Schräge 24 entlang der Schräge 23. Hierdurch werden die Bauteile axial voneinander entfernt, wie es der Doppelpfeil in Figur 8 andeutet. Gleichzeitig werden die Bolzen 15, 16 aus den Löchern 19 entfernt und wird die Bolzenverbindung gelöst. Als Ergebnis ist der bei einem Frontalzusammenstoß wirkende Kraftfluss entlang der Kolbenstange 9 unterbrochen. Das Pedal 7 ist damit kraftfrei.

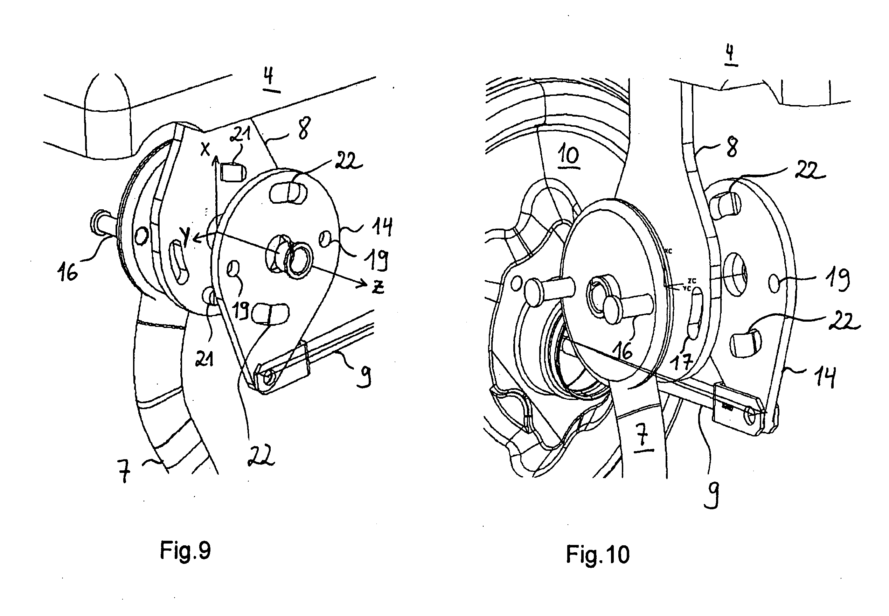

Die Figuren 9 und 10 zeigen jeweils eine Seitenansicht der zweiten Ausführungsform mit Blick parallel zur profilierten Fläche. Das zweite, sich am karosseriefesten Bauteil 4 abstützende zweite Bauteil 8 verfügt nun über die besagten Erhebungen 21, die in die korrespondierenden Löcher 22 des ersten Bauteils 14 eingreifen. Die Funktionsweise dieser zweiten Ausführungsform ist dieselbe wie bei der ersten Ausführungsform.

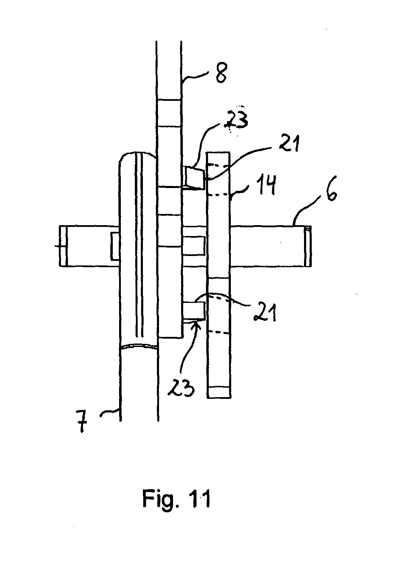

Figur 11 ist für die zweite Ausführungsform eine Seitenansicht mit Blick parallel zur profilierten Fläche. Man erkennt, dass die Erhebungen 21 des separaten Koppelstücks 8 wie bei der ersten Ausführungsform über eine Schräge 23 verfügen. Mit dieser kann eine Drehung des zweiten Bauteils 14 relativ zum Koppelstück in eine Relativbewegung dieser Bauteile in axialer Richtung überführt werden. Dabei geraten die Erhebungen 21 außer Eingriff und wird der bei einem Frontalzusammenstoß in y-Richtung wirkende Kraftfluss unterbrochen.

### Bezugszeichenliste

- 01: Bremsmodul
- 02: Pedalwerk
- 03: Fahrzeugquerträger
- 04: Karosseriebauteil
- 05: Seitenwange
- 06: Achse
- 07: Pedal
- 08: zweites Bauteil
- 09: Kolbenstange
- 10: Bremskraftverstärker
- 11: Bereich
- 12: Teil
- 13: erste Bauteilfläche
- 14: erstes Bauteil
- 15: Bolzen
- 16: Bolzen
- 17: Langloch
- 18: Langloch
- 19: Loch
- 20: zweite Bauteilfläche
- 21: Erhebung
- 22: Loch
- 23: Schräge
- 24: Schräge
- 25: Pedalplatte

## Patentansprüche

1. Pedalwerk für ein Kraftfahrzeug, umfassend eine Kolbenstange (9) und ein Pedal (7), bei dem
- der Kolbenstange eine erste Bauteilfläche (13) und dem Pedal eine zweite Bauteilfläche (20) zugeordnet ist,
- mindestens eine der beiden Bauteilflächen profiliert ist,
- die beiden Bauteilflächen in flächigem Kontakt miteinander stehen,
- das die erste Bauteilfläche besitzende erste Bauteil (14) und das die zweite Bauteilfläche besitzende zweite Bauteil (8) gemeinsam um eine Achse (6) drehbar gelagert und miteinander lösbar mittels einer Bolzenverbindung verbunden sind, deren Bolzen (15, 16) in kreisrunde Löcher (19) des ersten Bauteils (14) münden,
- sich das zweite Bauteil bei einem Frontalaufprall an einem stationären Karosserieteil (4) abstützt,
**dadurch gekennzeichnet, dass** das zweite Bauteil das Pedal (7) ist und dass die Bolzen (15, 16) der Bolzenverbindung hierbei durch Langlöcher (17, 18) des Pedals (7) geführt sind.

2. Pedalwerk nach Anspruch 1, bei dem das erste Bauteil eine Scheibe ist, die Scheibenfläche parallel zur Kolbenstange ausgerichtet ist, und die Scheibe exzentrisch und drehbar mit der Kolbenstange befestigt ist.

3. Pedalwerk nach Anspruch 2, bei dem zwischen der Scheibe und dem zweiten Bauteil eine lösbare Verbindung besteht.

4. Pedalwerk nach Anspruch 3, bei dem die Scheibe und das zweite Bauteil mit einem Bolzen miteinander verbunden sind.

5. Pedalwerk nach Anspruch 4, bei dem die Höhe des Bauteilflächenprofils größer ist als diejenige Strecke, um die der Bolzen in die Scheibe oder das zweite Bauteil eingedrungen ist.

6. Pedalwerk nach einem der vorherigen Ansprüche, bei dem eine Bauteilfläche eine Erhebung besitzt, und die andere Bauteilfäche eine hierzu korrespondierende Ausnehmung.

7. Pedalwerk nach einem der vorherigen Ansprüche, bei dem die Profilierung eine Erhebung (21) mit einer im Wesentlichen flächigen Schräge (23) umfasst.

8. Pedalwerk nach Anspruch 7, bei dem die Schräge eine Ebene ist.

## Claims

1. A pedal mechanism for a motor vehicle, comprising a piston rod (9) and a pedal (7), in which:
- a first component surface (13) is assigned to the piston rod and a second component surface (20) is assigned to the pedal,
- at least one of the two components surfaces is profiled,
- the two component surfaces are in planar contact with one another,
- the first component (14) having the first component surface and the second component (8) having the second component surface are mounted so they are jointly rotatable around an axis (6) and are detachably connected to one another by means of a bolt connection, whose bolts (15, 16) merge into circular holes (19) of the first component (14),
- the second component is supported on a stationary vehicle body part (4) in the event of a frontal impact,
**characterized in that** the second component is the pedal (7), and the bolts (15, 16) of the bolt connection are guided through oblong holes (17, 18) of the pedal (7) in this case.

2. The pedal mechanism according to Claim 1, wherein the first component is a disc, whose disc face is oriented parallel to the piston rod, and the disc is fastened to the piston rod eccentrically and so it is rotatable.

3. The pedal mechanism according to Claim 2, wherein there is a detachable connection between the disc and the second component.

4. The pedal mechanism according to Claim 3, wherein the disc and the second component are connected to one another using a bolt.

5. The pedal mechanism according to Claim 4, wherein the height of the component surface profile is greater than the distance by which the bolt is pressed into the disc or the second component.

6. The pedal mechanism according to one of the preceding claims, wherein one component surface has a protrusion, and the other component surface has a recess corresponding thereto.

7. The pedal mechanism according to one of the preceding claims, wherein the profiling comprises a protrusion (21) having an essentially planar bevel (23).

8. The pedal mechanism according to Claim 7, wherein the bevel is a plane.

## Revendications

1. Pédalier pour un véhicule à moteur, comprenant une tige de piston (9) et une pédale (7), dans lequel
- une première surface de composant (13) est associée à la tige de piston et une deuxième surface de composant (20) à la pédale,
- au moins une des deux surfaces de composant est profilée,
- les deux surfaces de composant sont en contact à plat l'une avec l'autre,
- le premier composant (14) possédant la première surface de composant et le deuxième composant (8) possédant la deuxième surface de composant sont supportés ensemble avec possibilité de rotation autour d'un axe (6) et reliés entre eux de manière amovible au moyen d'un assemblage boulonné, dont les boulons (15, 16) débouchent dans des trous circulaires (19) du premier composant (14),
- le deuxième composant s'appuie sur une partie de carrosserie stationnaire (4) en cas de collision frontale,
**caractérisé en ce que** le deuxième composant est la pédale (7) et **en ce que** les boulons (15, 16) de l'assemblage boulonné sont alors guidés par des trous oblongs (17, 18) de la pédale (7).

2. Pédalier selon la revendication 1, dans lequel le premier composant est un disque, la surface du disque est orientée parallèlement à la tige de piston et le disque est fixé de façon excentrique et avec possibilité de rotation à la tige de piston.

3. Pédalier selon la revendication 2, dans lequel il existe une liaison pouvant être défaite entre le disque et le deuxième composant.

4. Pédalier selon la revendication 3, dans lequel le disque et le deuxième composant sont reliés entre eux avec un boulon.

5. Pédalier selon la revendication 4, dans lequel la hauteur du profil de surface du composant est plus grande que la distance de laquelle le boulon a pénétré dans le disque ou dans le deuxième composant.

6. Pédalier selon l'une des revendications précédentes, dans lequel une surface de composant possède une saillie et l'autre surface de composant un évidement correspondant à celle-ci.

7. Pédalier selon l'une des revendications précédentes, dans lequel le profilage comprend une saillie (21) avec un biseau (23) sensiblement plan.

8. Pédalier selon la revendication 7, dans lequel le biseau est un plan.
